Europäisches Patentamt

European Patent Office

Office européen des brevets

(19)

(11) Veröffentlichungsnummer: **0 223 117**
**B1**

(12) **EUROPÄISCHE PATENTSCHRIFT**

(45) Veröffentlichungstag der Patentschrift: **12.09.90**

(51) Int. Cl.⁵: **B 64 C 27/32**

(21) Anmeldenummer: **86114934.2**

(22) Anmeldetag: **27.10.86**

(54) Zirkulationsgesteuertes Rotorsystem für Luftfahrzeuge.

(30) Priorität: **06.11.85 DE 3539338**

(43) Veröffentlichungstag der Anmeldung:
**27.05.87 Patentblatt 87/22**

(45) Bekanntmachung des Hinweises auf die
Patenterteilung:
**12.09.90 Patentblatt 90/37**

(84) Benannte Vertragsstaaten:
**DE FR GB IT**

(56) Entgegenhaltungen:
**US-A-4 242 044**

(73) Patentinhaber: **DORNIER GMBH**
**Postfach 1420**
**D-7990 Friedrichshafen 1 (DE)**

(72) Erfinder: **Zimmer, Herbert, Dr.-Ing.**
**Virchowstrasse 21**
**D-7990 Friedrichshafen (DE)**

(74) Vertreter: **Landsmann, Ralf, Dipl.-Ing.**
**Kleeweg 3**
**D-7990 Friedrichshafen 1 (DE)**

Courier Press, Leamington Spa, England.

## Beschreibung

Die Erfindung betrifft zirkulationsgesteuerte Rotorsystem für Drehflügelflugzeuge, enthaltend Rotorblätter mit Ausblaseschlitzen an deren Blattvorder- und bzw. oder Blatthinterkante eine Steuereinrichtung zur Steuerung der Zirkulation der Umströmung der Rotorblätter im Sinne einer zyklischen bzw. multizyklischen und kollektiven Rotorblattwinkelsteuerung mittels steuerbarer, separater und differenzierter Druckgasführung vone iner Druckmittelkammer zu den Rotorblattausblaseschlitzen und entsprechend verstellbaren Steuergliedern.

Bei Hubschraubern wird in bekannter Weise Auftrieb und Vortrieb durch den Hauptrotor erzeugt. Der Rotor übernimmt dabei auch die Funktion der Lagesteuerung. Für den Drehmomentenausgleich und die Steuerung um die Hochachse dient ein Heckrotor, dessen Achse senkrecht zur Flugrichtung steht. Hubschrauber der genannten Art besitzen optimale Schwebeflugeigenschaften, aber sie sind Flächenflugzeugen im Hinblick auf Vorwärtsgeschwindigkeit, Reichweite und Wirtschaftlichkeit unterlegen. Der Grund für die begrenzte Vorwärtsgeschwindigkeit liegt darin, dass sich bei zunehmender Vorwärtsgeschwindigkeit die Anströmgeschwindigkeit an den vorlaufenden Rotorblättern der Schallgeschwindigkeit annähert, wobei der Widerstand stark ansteigt, bei den rücklaufenden Rotorblättern hingegen die Strömung über grosse Bereiche des Umlaufs infolge hoher Blattanstellwinkel abreißt und ausserdem grosse Bereiche der Rotorblätter von rückwärts angeströmt werden.

Um den Einsatzbereich von Hubschrauberrotoren zu höheren Fluggeschwindigkeiten hin zu erweitern, muß grundsätzlich die Fortschrittsgradgrenze überwunden werden, welche dann erreicht ist, wenn die rücklaufenden Rotorblätter infolge Strömungsablösung den geforderten Auftrieb nicht mehr erzeugen können.

Die Fortschrittsgradgrenze kann überwunden werden, in dem der Rotor durch Ausblasen von Druckluft über Schlitze an den Rotorblatthinter- und bzw. oder Rotorblattvorderkanten eine Zirkulationssteuerung aufweist und die Auftriebserzeugung an den Rotorblättern unabhängig von der örtlichen Anblasrichtung ist.

Bei Fluggeräten, welche die sogenannte Zirkulationssteuerung anwenden, ist bekannt, für die höherharmonische, mechanische Steuerung des Druckmediums eine flexible, feststehende Steuerscheibe zu verwenden, die bei durch entsprechende Ansteuermittel einem vorgegebenen Steuergesetzt entsprechend verformt wird.

So zeigt die US—PS 4,242,044 eine experimentelle Ausbildung einer Steuerventileinrichtung, die zur Steuerung eines Druckmediums aus einer Plenumkammer zu den Ausblaseschlitzen an den Kanten der Rotorblätter eine flache, flexible Ringscheibe als verstellbares Ventilglied aufweist.

Bei den zur Steuerung der einzelnen Ventilöffnungen notwendigen Formänderungen der Steuerringscheibe, die in Richtung und Grösse ständig wechseln, ist eine nur sehr geringe Lebensdauer der Scheibe zu erwarten und die erforderliche sichere Arbeitsweise der Ventileinrichtung nicht erzielbar.

Der vorliegenden Erfindung liegt die Aufgabe zugrunde, sogenannte Zirkulationssteuereinrichtungen in bezug auf eine sichere Funktion zu verbessern. Die gestellte Aufgabe ist erfindungsgemäss durch eine Ausbildung einer Zirkulationssteuerung nach den Merkmalen des Hauptanspruchs und in weiterer vorteilhafter Ausgestaltung nach den Merkmalen weiterer Ansprüche gelöst.

Durch die erfindungsgemässe Ausbildung der Zirkulationssteuerung, mittels der die Fortschrittsgradgrenze von Rotoren infolge der Unabhängigkeit der Auftriebserzeugung durch die Rotorblätter von der örtlichen Anströmrichtung entfällt, ist die zugehörige Steuereinrichtung in Aufbau und Wirkungsweise bezüglich einer sicheren Funktion und Lebensdauer gegenüber bekannten Ausbildungen wesentlich verbessert. Ungünstige Beanspruchungen der Steuerventilglieder, wie bei den bekannten Steuerscheiben, sind durch die erfindungsgemässe Ausbildung weitgehende vermieden.

Ferner lässt die erfindungsgemässe Ausbildung eine Steuerbewegung der Einzelelemente für die höherharmonische, mechanische Steuerung des Druckmediums zu den Steuerschlitzen an den Rotorblättern in enger Anpassung an vorgegebene Steuergesetzte zu.

In der Zeichnung sind beispielsweise Ausführungsformen gemäss der Erfindung dargestellt, die anhand der nachfolgenden Beschreibung näher erläutert werden.

Es zeigen:

Fig. 1 eine perspektivische Gesamtansicht eines Flugschraubers,

Fig. 2 in einem Ausschnitt aus Fig. 1 einen Längsschnitt durch den Rotorkopf,

Fig. 3 in einem vergrösserten Ausschnitt aus Fig. 2 quergeschnitten Einzelheiten der Rotorblattsteuerung,

Fig. 4 in einem Ausschnitt aus Fig. 3 bzw. 4 schematisiert und prinzipielle Ausbildung der Steuerung in Perspektive,

Fig. 5 bis 7 in schematischer Darstellung Querschnitte durch die Rotorblätter, mit Darstellung der Austrittsschlitze an der Vorder- bzw. Hinterkante,

Figur 8 in einem perspektivischen Ausschnitt aus Figur 2 bzw. 3 eine Ausführungsform der Steuerringscheiben der Zirkulationssteuereinrichtung,

Figur 8a eine Einzelheit der Steuereinrichtung nach Figur 8, perspektivisch dargestellt und die

Figuren 9 bis 11 weitere Ausführungsbeispiele für die Steuerglieder in perspektivischer Darstellung, und

Figur 12 in einem Ausschnitt eine weitere Ausführungsform der Steuerringscheiben in Perspektive, schematisiert dargestellt.

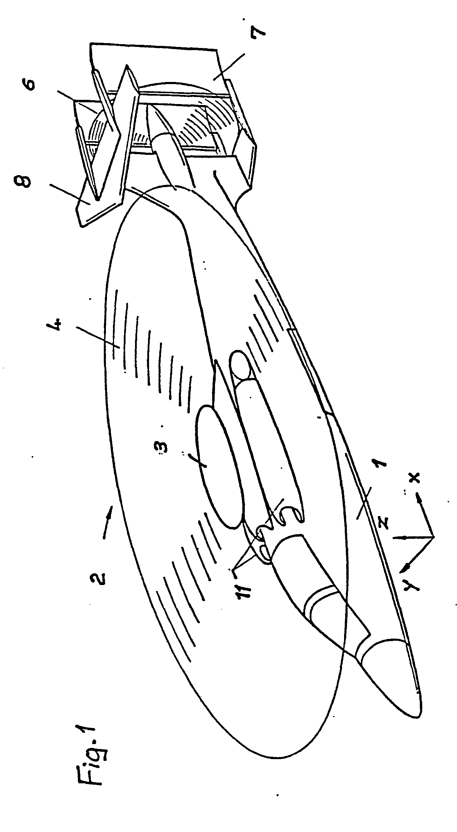

Gemäss Figur 1 sind als Hauptkomponenten für einen Flugschrauber mit 1 die Fluggerätezelle, mit 2 der den Rotorkopf 3 und die Rotorblätter 4 enthaltende, zur Auftriebserzeugung dienende Hauptrotor, mit 6 die zur Vorwärtsschuberzeugung dienende Luftschraube und mit 7 Steuerklappen zur Steuerung des Fluggerätes um die Gierachse z bezeichnet. 8 bezeichnet das zur Steuerung des Fluggerätes um die Querachse y dienende Höhenruder. Für den Antrieb des Hauptrotors 2 und die Luftschraube 6 ist eine beiden gemeinsame hier im einzelnen nicht näher dargestellte Antriebsanlage 11 vorgesehen.

Es ist ferner ein über eine Getriebeeinheit von der Antriebsanlage antreibbares Gebläse zur Erzeugung von Druckluft für die Zirkulationssteuerung des Rotorsystems angeordnet. Zur Steuerung der Druckluft bzw. Ausblaseluft zu den Ausblaseschlitzen an den Rotorblättern 4 ist innerhalb des Rotorkopfes 3 eine Steuereinheit 16 vorgesehen.

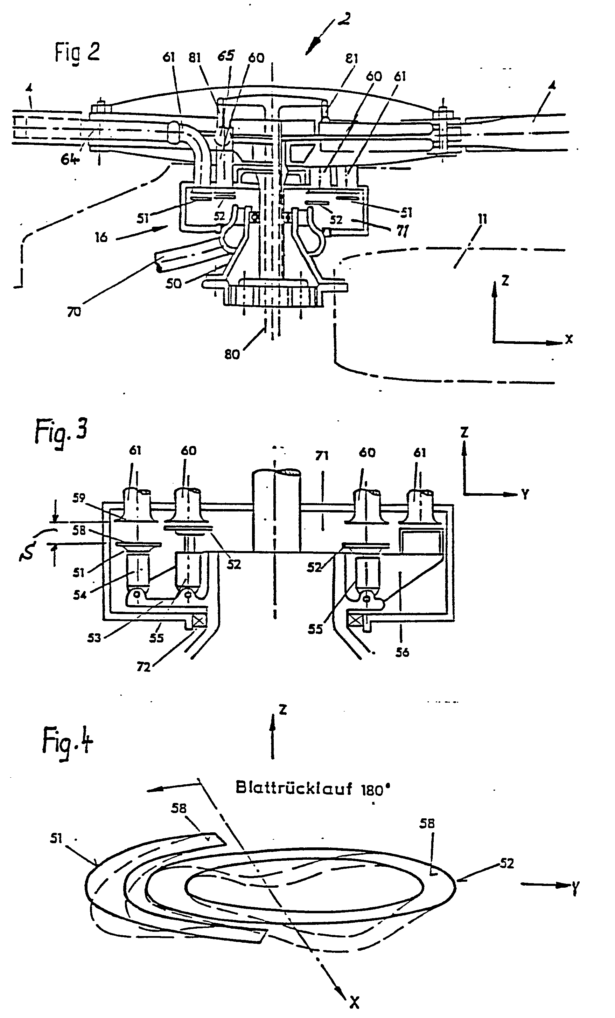

Aus den Figuren 2 bis 4 ist das nach dem bekannten Prinzip der Zirkulationssteuerung arbeitende, gelenk- und lagerlose Rotorsystem zu erkennen. Der Hauptrotor 2 ist dabei mittels der Antriebsanlage des Fluggeräts über Getriebeeinheiten mechanisch antreibbar. Die Zirkulationssteuerung wird in bekannter Weise bewirkt durch Ausblasen von unter Druck stehender Luft an den Hinter- bzw. Vorderkanten der Rotorblätter 4, wobei die Steuerung der Ausblaseluft nach beliebigen, auch höherharmonischen Steuergesetzten ohne rotierende Teile arbeitet. Das Rotorsystem weist ferner eine mechanische Steuerung für die kollektive Rotorblatterverstellung auf.

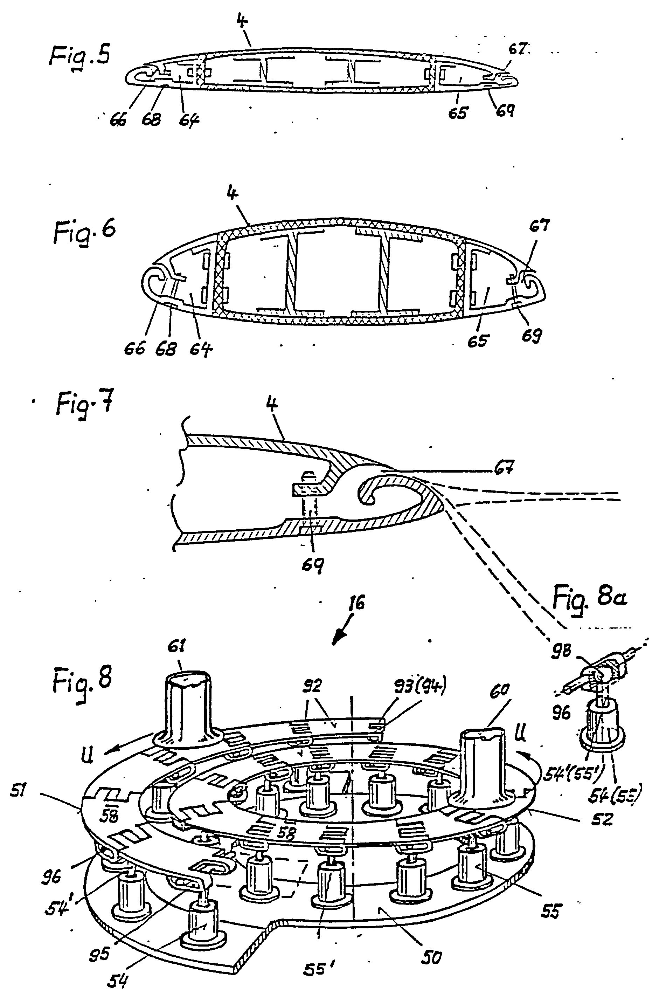

Die Steuereinheit 16, dargestellt in ihrem prinzipiellen Aufbau in den Figuren 2 bis 4, enthält in einem gegenüber dem umlaufenden Rotorkopf 3 feststehenden Gehäuse 50 zueinander konzentrisch angeordnete Steuerglieder 51 bzw. 52, deren Aufbau im einzelnen in den Figuren 8 bis 12 gezeigt ist, wobei die Steuerglieder 51 bzw. 52 beeinflusst werden durch Stellzylinder 54 bzw. 55. Eine Anzahl solcher Stellzylinder sind auf den Umfang der Steuerglieder 51 bzw. 52 verteilt angeordnet und stützen sich mittels ihrer Zylindergehäuse am feststehenden Gehäuse 50 ab, während deren Stellkolben auf die Steuerglieder 51 bzw. 52 einwirken. Die Stellzylinder 54 greifen hierbei an der die Ausblasung über die Schlitze an der Rotorblattvorderkante bewirkenden Steuerglied 51 und die Stellzylinder 55 an dem die Ausblasung über die Schlitze an der Blatthinterkante steuernden Glied 52 an. Die Stellzylinder 55 werden über hier der Vereinfachung halber nicht dargestellte, vom Piloten zu bedienende Druckmittelsteuereinrichtungen betätigt. Solche Einrichtungen können Schiebersteuerungen bekannter Art sein, die Druckmittel entsprechend der jeweils erforderlichen Koblenstellung der Stellzylinder 54 bzw. 55 jeder der Zylinderkammern unabhängig zuleitet.

Die als Steuerfläche dienende, in Figur 4 insgesamt mit 58 bezeichnete Fläche der in bezug auf die Rotordrehung stationären Steuerglieder 51 bzw. 52 wirkt zusammen mit den Öffnungen 59 von Luftzuführungsrohren 60 bzw. 61, die an sich in Längsrichtung innerhlab der Rotorblätter 4 erstreckende Luftzuführungskanäle 64 bzw. 65 anschliessen und mit diesen umlaufen. Über die in eine horizontale Ebene oder, bezogen auf den Steuerumfang U, in eine ein- oder mehrfach gewellte Form verformbaren Steuerglieder 51 bzw. 52 bzw. deren Steuerflächen 58, gleiten bei Rotordrehung berührungslos die Öffnungen 59 der Rohre 60 bzw. 61 der Rotorblätter.

Gemäss der Figuren 5 bis 7 sind, wie bereits vorangehend beschrieben, im Bereich der Vorder- und Hinterkante der Rotorblätter 4 Luftauslaßschlitze 66 bzw. 67 gebildet, die ständig mit den Luftzuführungskanälen 64 bzw. 65 in Verbindung stehen.

Die Steuerglied 51 für die Steuerung der durch einen Kompressor erzeugten Steuerluft zu den Luftauslaßschlitzen 66 an den Rotorblattvorderkanten ist auf dem Bereich von etwa 0° bis 180°, auf dem die Rotorblätter 4 vorlaufen, starr angeordnet (vergleiche 56, Figur 3), so dass die Steuerfläche 58 des Steuergliedes 51 die Öffnungen 59 der Luftzuführungsrohre 61 in diesem Bereich praktisch absperrt. Das Steuerglied 51 wird lediglich im Bereich des Blattrücklaufs (180° bis 360°) gesteuert (Figur 4). Der starre Abschnitt des Steuergliedes 51 wird von einem feststehenden Lagerteil 56 getragen.

Die Luftzuführung vom Kompressor zu den Rotorblättern 4 erfolgt über ein Luftzuführungsrohr 70 (Figur 2) zu einer Ringkammer 71 anschliessend an das feststehende Gehäuse 50, die mittels Dichtungen 72 nach aussen abgeschlossen ist. Die Spaltbreite der Schlitze 66 bzw. 67 wird mittels der Schlitzeinstellschrauben 68 bzw. 69 vorgenommen.

Gemäss der Ausführung nach Figur 8 bzw. 8a weist die Steuereinheit 16 für die Zirkulationssteuerung der Rotorblätter 4 hierbei Steuerglieder, entsprechend den Steuergliedern 51 bzw. 52 gemäß Figur 4 auf, die sich aus gelenkig und zueinander beweglich aneinander anschliessenden Sektorabschnitten 92 zusammensetzen und gemeinsam eine Ringform mit ringförmigen Steuerflächen 58 bilden. Die Sektorabschnitte 92 jeder der beiden Steuerglieder 51 bzw. 52 besitzen im Bereich der jeweils einander zugekehrten radialen Stirnseiten Vorsprünge 93 und entsprechende Rücksprünge 94, die scharnierartig ineinander eingreifen.

An den Vorsprüngen 93 bzw. 94 sind sich in Umfangsrichtung erstreckende spaltförmige Ausnehmungen 95 gebildet, in die Scharnierachsen 96, getragen von den Stellvorrichtungen 54 bzw. 55 der Zirkulationssteuerung mit etwa radialer und zur zugehörigen Steuerscheibenebene paralleler Lage eingreifen. Der Anschluss der einzelnen Sektorabschnitte 92 aneinander erfolgt unter Belassung eines Spiels mittels der als Längsspalte ausgeführten Ausnehmungen 95, bezogen auf die Umfangsrichtung der Steuerglieder 51 bzw. 52. Die Scharnierachsen 96 werden getragen von den Stellkolben 54' bzw. 55' der Stellzylinder 54 bzw. 55, mittels eines Kugelgelenks 98, welches eine freie Einstellung der Achsen 96 zulässt (Figur 8a). Wie bei sämtlichen gezeigten Ausführungsbeispielen stehen die Steuerglieder in Bezug auf ihren Umfang ortsfest, während die Luftzuführungsrohre 60 bzw. 61 mit dem Rotorkopf 3 bzw. den Rotorblättern 4 umlaufen.

Über die Stellkolben 54' bzw. 55' der Stellzylinder 54 bzw. 55 und die Scharnierachsen 96 an den Stellkolben 54' bzw. 55' ist der Steuerspalt S zwischen den Steueröffnungen 59 der Luftzuführungsrohre 60 bzw. 61 und den Steuerflächenabschnitten 58 der Sektorabschnitte 92 veränderbar und damit die Menge der in der Kammer 71 unter Druck stehenden und zu den Steuerschlitzen 66 bzw. 67 an der Vorder- bzw. Hinterkante der Rotorblätter 4 strömenden Steuerluft. Mittels der in die Längsschlitze 95 der Vorsprünge 93 bzw. 94 unter einem Bewegungsspiel in der Steuergliedhauptebene und der Kugelgelenklagerung 98 lässt sich mittels der Sektorabschnitte 92, abweichend von der Horizontalebene, ein auf dem Umfang wellenförmiger Verlauf der Steuerflächen 58 einstellen. Dabei ist die quer zur Umfangsrichtung verlaufende Wellung durch eine entsprechende, voneinander unabhängige Einstellung der Stellzylinder 54 bzw. 55 frei wählbar. Zur Erzielung einer genügend differenzierten Steuerung muß eine entsprechende Anzahl von Sektorabschnitten 92 mit den entsprechenden Steuerflächenabschnitten 58 vorgesehen werden.

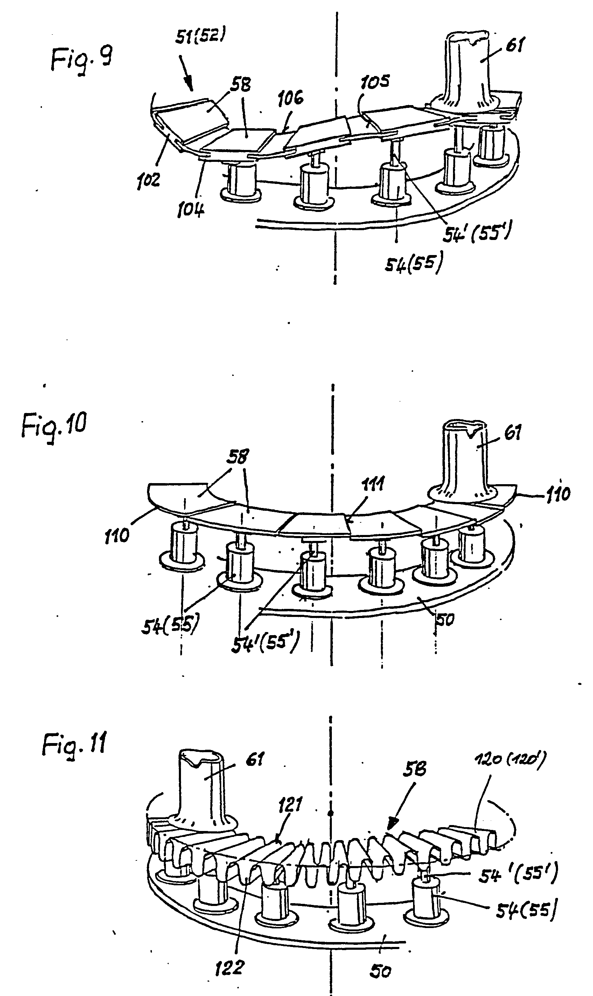

Bei dem in Figur 9 gezeigten Ausführungsbeispiel sind die Steuerglieder 51, 52 für die Steuerung der Druckluft zu den Schlitzen 66 bzw. 67 an der Rotorblattvorder- bzw. Rotorblatthinterkante gebildet aus sektorförmigen, starren Plattenteilen 102 mit Längsschlitzen 104 an den einander benachbarten Stirnseiten 105. Die Plattenteile 102 stellen einerseits die Anschlussteile für den Anschluss der Stellkolben 54' bzw. 55' der auf den Umfang verteilt angeordneten Stellzylinder 54 bzw. 55 und andererseits Elemente zur Bildung der Steuerflächen bzw. Steuerflächenabschnitte 58 für die Luftzuführung zu den Rohren 60 bzw. 61 dar. Die Steuerglieder bzw. deren Steuerflächen 58 sind gebildet durch starre Plattenteile 102, in deren stirnseitige Schlitze 104 Abschnitte von aus elastisch verformbarem Material bestehende Einsätze 106 eingreifen. Dabei können Plattenteile 102 und Einsätze 106, bezogen auf den Umfang der Steuerscheiben, radial und in der horizontalen Hauptebene gegeneinander ein Bewegungsspiel aufweisen. Die sich zu Ringscheiben zusammenfügenden Plattenteile 102 in Verbindung mit den Einsätzen 106 bilden mit ihren Oberflächenabschnitten die Steuerflächen 58 der Steuerglieder 51 bzw. 52, wobei hier in einem Ausschnitt der Vereinfachung halber nur eines der Steuerglieder dargestellt ist.

Das Ausführungsbeispiel gemäss Figur 10 sieht anstelle der Sektorelemente der vorangehend beschriebenen Ausbildung, Sektorelemente 110 vor, die sich in Umfangsrichtung ohne Koppelung untereinander bzw. aneinander im Bereich ihrer quer zum Umfang verlaufenden Stirnkanten 111 zur Bildung der Steuerglieder 51 bzw. 52 lose zur erforderlichen Ringscheibenform aneinanderreihen. Die Oberseite dieser Sektorelemente 110 bilden gemeinsam die Ringsteuerfläche 58. Die Elemente 110 werden hierbei getragen von den Stellkolben 54' bzw. 55' der Stellzylinder 54 bzw. 55, wobei die Elemente 110 bzw. deren Steuerflächenabschnitte bei Verstellung der Stellkolben 54' bzw. 55' in unterschiedliche Lagen mit Bezug auf ihre Steuerflächenabschnitte 58 parallel verstellt werden in der Art einer Treppenabstufung. Dabei ist auch die Einstellung sämtlicher Sektorelemente 110 in eine Lage, in der die Steuerflächen 58 in einer gemeinsamen horizontalen Ebene liegen, vorgesehen. Keines der Sektorelemente 110 ist bei dieser Ausführung Biegekräften unterworfen.

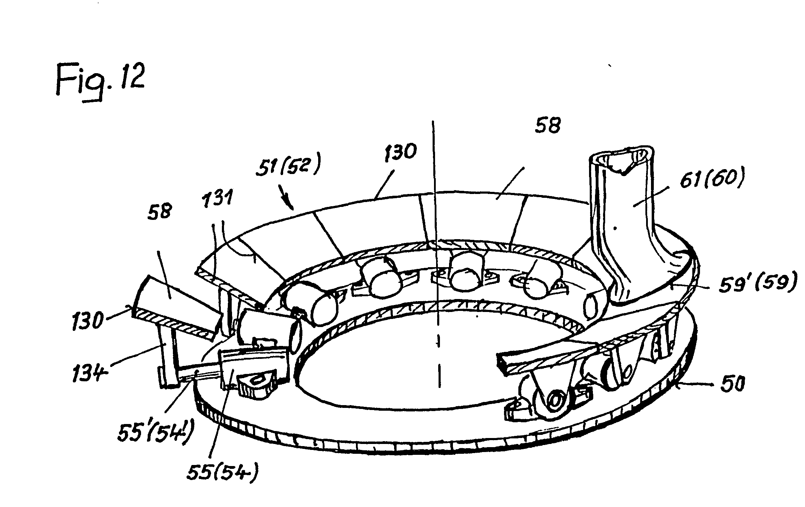

Bei dem in Figur 11 gezeigten Ausführungsbeispiel sind für die Zirkulationssteuerung zur Umfangsrichtung U durch eine Querwellung bzw. Querfaltung umformbare aus federndem Material gebildete Steuerglieder 120 bzw. 120' vorgesehen, die der Arbeitsweise der Steuerglieder 51 bzw. 52 entsprechen. Die Wellen bzw. Falten der Ringteile, die hier der Deutlichkeit halber übertrieben hoch dargestellt sind, verlaufen radial, das heisst, dass die Längsrichtung der Wellenberge 121 bzw. der Wellentäler 122 radial zum Zentrum Z der Steuerglieder weist.

Die gewellt ausgebildeten Steuerglieder 51; 52 werden in bezug auf die Einstellung einer der Wellung bzw. Faltung überlagerten, in Umfangsrichtung U verlaufenden Wellung und damit der Verlauf der Steuerfläche 58 beeinflusst durch die Stellzylinder 54 bzw. 55, deren Stellkolben 54' bzw. 55' auf der der Steuerfläche 58 abgewandten Seite der Steuerglieder 51; 52 angreifen. Der Angriff kann durch Befestigung der Kolben 54' bzw. 55' am Gleid 51; 52 bewerkstelligt werden. Die Ausbildung gemäss Figur 11 ist in der Lage, die bei Verstellung der Steuerglieder 120 bzw. 121 in eine gewellte Form auftretende Längenänderung und Formänderung aufzunehmen.

Im einzelnen ist gemäss der prinzipiellen Darstellung der Luftführung zu den Schlitzen 66 bzw. 67 an den Rotorblättern 4 nach den Figuren 2 bis 4 und der Ausbildungen nach den Figuren 8 bis 12 die Wirkungsweise wie nachfolgend beschrieben:

Die Zirkulationssteuerung des Rotorsystems erfolgt so, dass die vom Kompressor erzeugte Druckluft über die Zuleitung 70 zur Ringkammer 71 geleitet wird. Von dieser Kammer 71 aus, gelangt die Druckluft in die Luftzuführungsrohre 60 bzw. 61 und von dort über die Kanäle 64 bzw. 65 zu den sich an der Vorder- bzw. Hinterkante der Rotorblätter 4 in Spannweitenrichtung erstreckenden Luftauslaßschlitzen 66 bzw. 67. Die Steuerglieder 51 bzw. 52 steuern die Zumessung der Druckluft aus der Kammer 71 durch entsprechende Einstellung ihrer Form und damit den Verlauf der Steuerfläche 58 mittels der Stellzylinder 54 bzw. 55 zu den Luftführungskanälen 64 bzw. 65 und damit zu den Ausblaseschlitzen 66 bzw. 67 an den Rotorblättern 4.

Die Steuerglieder 51 bzw. 52 sind, bezogen auf den Steuergliedumfang, durch die angreifenden Stellzylinder 54 bzw. 55 zwangsgeführt, so dass durch einen entsprechend gewellten Verlauf ein beliebiges oder höherharmonisches Steuergesetzt dargestellt werden kann. Während die Steuerglieder 51 bzw. 52 mit den sie aufnehmenden Stellzylindern 54 und 55 feststehen, laufen die Luftzuführungsrohre 60 bzw. 61 mit den Rotorblättern 4 um. Bei der Relativbewegung zwischen den Rotorblättern 4 mit ihren Luftzuführungsrohren 60 bzw. 61 und den feststehenden Steuergliedern 51 bzw. 52 bewegen sich die Öffnungen 59 der Luftzuführungsrohre 60 bzw. 61 berührungslos entlang der Steuerfläche 58 der Steuerglieder 51 bzw. 52.

Da die Öffnungen 59 der Luftzuführungsrohre in einer gemeinsamen Ebene liegen, wird die Zuführung von Luft aus der Kammer 71 entsprechend der Verformung der Steuerglieder 51; 52 bzw. der Steuerfläche 58 zu den Luftauslaßschlitzen 66 bzw. 67 an den Rotorblättern 4 geleitet und durch die Steuerspalte S zwischen der Steuerfläche 58 und den Öffnungen 59 mehr oder weniger gedrosselt. Bei der gezeigten Ausführung gemäss Figur 3 bzw. 4 ist durch das starre Steuerglied 51 innerhalb des Bereichs des Blattvorlaufs zwischen 0° bis 180° der Steuerspalt S praktisch geschlossen, so dass in diesem Umlaufbereich die Rotorblätter 4 über die Vorderkantenspalte 66 nicht angesteuert werden.

Bei dem gezeigten Ausführungsbeispiel wird die kollektive Verstellung der Rotorblätter 4 mechanisch bewirkt durch die Steuerstange 80 und die Steuerhebel 81. Die Rotorblätter 4 sind bei dieser Ausführung z.B. über Federpakete fest mit dem Rotorkopf verbunden. Die Federpaketeinspannung der Rotorblätter erlaubt, die erforderliche Schlagbewegung, Schwenkbewegung und Einstellwinkeländerungsbewegung. Die kollektive Blattansteuerung kann aber auch mittels der erfindungsgemässen Ausbildung bei Anordnung von Mitteln zur Überlagerung der zyklischen Ansteuerung bewirkt werden.

Bei dem in Figur 9 gezeigten Ausführungsbeispiel werden die Stellzylinder 54 bzw. 55 so betätigt, dass deren Stellkolben 54' bzw. 55' gegenüber dem feststehenden, ebenen Abstützteil 50 (Gehäuse) unterschiedliche Ausfahrstellungen einnehmen. Damit wird den Steuergliedern 51 bzw. 52 eine gewellte Form aufgezwungen und wie auch bei den Ausführungen gemäss Figur 8 bzw. 8a bereits beschrieben, die Luft aus der Kammer 71 zu den Auslaßschlitzen 66 bzw. 67 der Rotorblätter 4 bewirkt. Die Einsätze 106 können aus geeignetem, elastische Verformungen zulassenden Material gebildet sein.

Entsprechend der Ausführung nach Fig. 10 werden die einzelnen Sektorelemente 110 mittels dem jeden der Elemente 110 zugeordneten Steuerzylinder 54 bzw. 55 voneinander unabhängig entsprechend dem vorgegebenen Steuergesetzt verstellt. Damit ist mit einem treppenförmigen Verlauf der Steuerflächenabschnitte 58 eine in Umfangsrichtung U verlaufende Wellenform einstellbar.

Entsprechend der Ausführung nach Figur 11 wird durch die auf dem Umfang der Steuerglieder 120 bzw. 120' mit unterschiedlichen Ausfahrlängen der Stellzylinder 54 bzw. 55 den Steuergliedern 51; 52 eine Form aufgezwungen, bei der die Steuerfläche 58, gesehen in Umfangsrichtung, eine gewellte Form erhält, die sich der Wellung bzw. Faltung 121 bzw. 122 der Steuerglieder 51; 52 überlagert.

Die Ausbildung ist in der Lage, die bei Beeinflussung der Steuerglieder 51; 52 zur Steuerspalteinstellung S auftretenden Längenänderungen in Umfangsrichtung U oder quer dazu, bzw. Formänderungen bei aus biegsamen, jedoch längsbzw. quer nicht dehnbarem Werkstoff bestehenden Steuergliedern 51; 52 zu kompensieren.

Bei dem in Figur 12 gezeigten Ausführungsbeispiel setzen sich die als Steuerglieder arbeitenden Steuerringscheiben 51 bzw. 52 aus Einzelelementen 130 zusammen, deren Oberflächen Abschnitte 58 der Ringsteuerfläche zur Steuerung der Steuerspalte S zwischen den Öffnungen 59 bzw. 59' der Luftzuführungsrohre 60 bzw. 61 bilden. Die Steuerelemente 130 bzw. deren Steuerflächenabschnitte 58 bilden gemeinsam Ringscheibensektoren, die in Schließstellung (Spalt S geschlossen) mit ihren Stirnkanten 131 aneinander anliegen. In der Zeichnung gemäss Figur 12 ist als Beispiel zur Erläuterung der Verstellung der Steuerelemente eines der Steuerelemente 130 in einer Steuerstellung gezeigt, bei der der Spalt S bei Überstreichen der Steuerflächenabschnitte 58 durch die Öffnungen 59 bzw. 59' der Luftzuführungsrohre 60 bzw. 61 um einen bestimmten Betrag geöffnet ist.

Die Stellzylinder 54 bzw. 55 sind bei diesem Ausführungsbeispiel in der Horizontalebene zur Rotordrehachse mit radialer Lage ihrer Längsaschsen feststehend angeordnet, wobei die zugehörigen Stellkolben 54' bzw. 55' entsprechend radial gegenüber dem feststehenden Gehäuse 50, bzw. gegenüber den daran fest angeordneten Zylindern 54 bzw. 55 verstellbar sind. Die Stellkolben 54' bzw. 55' weisen feste Träger 134 auf, an denen die Elemente 130 befestigt sind.

Die Elemente 130 bzw. die Steuerflächenabschnitte 58 sind gegenüber der Horizontalebene geneigt und liegen gemeinsam auf einem Innenkegelmantel, wobei die Öffnungen 59 bzw. 59' der Zuführungskanäle 60 bzw. 61 in der gleichen Weise geneigt laufend ausgeführt sind.

Bei Verstellung der Elemente 130 unabhängig voneinander über eine hier nicht dargestellte Druckmittelsteuerung bekannter Bauart, lassen sich auf den Umfang U der sich aus den Elementen 130 zusammensetzenden Steuerringscheiben 51 bzw. 52 unterschiedliche Einstellungen in bezug auf die Steuerspalte S und damit höherharmonische Ansteuerungen der Rotorblätter 4 nach einem vorgegebenen Steuergesetzt erzielen.

Die geneigte Anordnung der Elemente 130 ermöglicht eine äusserst raumsparende Ausbildung des Rotorkopfes 3 bzw. der Steuereinrichtung 16, insbesondere in bezug auf die zur Rotordrehachse radiale Erstreckung, indem die Stellzylinder 54 bzw. 55 unterhalb der Steuerringteile 51 bzw. 52 (130) untergebracht sind.

Es ist nach der gezeigten Ausbildung gemäss Figur 12 aber auch denkbar, die Elemente 130 in einer gemeinsamen, horizontalen Ebene anzuordnen und die Steuerung mittels der Elemente 130 in der Art einer Schiebersteuerung gegenüber den Öffnungen 59 bzw. 59' radial zu verstellen.

Ferner ist eine Ausführungsform der Steuereinrichtung 16 realisierbar, bei der die radial verstellbaren Steuerelemente 130 gegenüber der Ausbildung nach Figur 12 Steuerflächenelemente 58 aufweisen, die auf einem Zylindermantel mit der Rotordrehachse als Zylinderlängsachse bzw. in Verstellungen der Elemente 130 auf zueinander konzentrischen Zylindermantelflächen liegen.

Die Öffnungen 59 bzw. 59' der Zuführungsrohre 60 bzw. 61 liegen bei einer solchen Ausführung ebenfalls auf einer Zylindermantelfläche konzentrisch zur Rotordrehachse.

## Patentansprüche

1. Zirkulationsgesteuertes Rotorsystem für Drehflügelflugzeuge, enthaltend Rotorblätter (4) mit Ausblaseschlitzen (66, 67) an deren Blattvorder- und bzw. oder Blatthinterkante und eine Steuereinrichtung (16) zur Steuerung der Zirkulation der Umströmung der Rotorblätter im Sinne einer zyklischen bzw. multizyklischen und kollektiven Rotorblattwinkelsteuerung mittels steuerbarer, separater und differenzierter Druckgasführung (59, 60, 61, 64) von einer Druckmittelkammer (71) zu den Rotorblattausblaseschlitzen und entsprechend verstellbaren Steuergliedern (51, 52), gekennzeichnet durch mindestens zwei getrennte, mehrere Einzelelemente (92; 102; 110; 111; 130) aufweisende ringscheibenförmige Steuerglieder (51; 52), wobei die Einzelelemente (92; 102; 110; 111; 130) in bezug auf die Umfangsrichtung aneinandergereiht angeordnet sind und Steuerflächen (58) bilden und wobei die Einzelelemente (92; 102; 110; 111; 130) unabhängig voneinander über Stellvorrichtungen (54, 55; 54', 55') gegenüber den Öffnungen (59, 59') der Druckgaszuführungen (61, 61') der Ausblaseschlitze (66, 67) an den Rotorblättern (4) verstellbar sind.

2. Rotorsystem nach Anspruch 1, dadurch gekennzeichnet, daß zur Steuerung der Einlaßöffnungen (59) der Druckgasführung (60, 61, 64, 65) zu den Rotorblattausblaseschlitzen (66, 67) jedem der Einzelelemente (92; 102; 110; 111; 130) eine der Stellvorrichtungen (54, 55; 54', 55') zugeordnet ist und mit ihrem verstellbaren Element (54, 54') an der der Steuerfläche (58) abgewandten Fläche der Einzelelemente (92; 102; 110; 111; 130) angreift.

3. Rotorsystem nach mindestens einem der vorangehenden Ansprüche, dadurch gekennzeichnet, daß die Steuerflächen (58) eine Kegelmantel-, Zylindermantel- bzw. Ringscheibenform aufweisen und daß die Einlaßöffnungen (59 bzw. 59') eine entsprechend geneigte Lage einnehmen.

4. Rotorsystem nach mindestens einem der vorangehenden Ansprüche, dadurch gekennzeichnet, daß die Steuerelemente (92; 102) unter Belassung eines Bewegungsspiels in Umfangsrichtung (U) miteinander gekoppelt sind.

5. Rotorsystem nach mindestens einem der vorangehenden Ansprüche, dadurch gekennzeichnet, daß Gelenke zwischen den sektorförmigen Abschnitten (92) mittels scharnierartigem Eingriff (93, 94) und mittels Schwenkachsen (96) unter Belassung eines Spiels in Umfangsrichtung (U) gebildet sind.

6. Rotorsystem nach mindestens einem der vorangehenden Ansprüche, dadurch gekennzeichnet, daß die Steuerglieder (51, 52) zumindest in Abschnitten (102, 106) des Umfanges aus elastisch verformbarem Werkstoff bestehen.

7. Rotorsystem nach mindestens einem der vorangehenden Ansprüche, dadurch gekennzeichnet, daß die Steuerglieder (51, 52) gebildet sind durch starre, sektorförmige Plattenteile (102) und zwischen diesen angeordnete, jeweils in Schlitze (104) zweier benachbarter Plattenteile (102) eingreifender flexibler Einsätze (106), wobei die Oberfläche (58) der Plattenteile (102) und der Einsätze (106) die Steuerfläche (58) der Steuerglieder (51, 52) bilden.

8. Rotorsystem nach mindestens einem der vorangehenden Ansprüche, dadurch gekennzeichnet, daß der Eingriff zwischen den Einsätzen (106) und den Plattenteilen (102) in den Schlitzen (104) unter einem allseitig eine relative Gleitbewegung der Teile (102 bzw. 106) gegeneinander zulassenden Bewegungsspiel erfolgt.

9. Rotorsystem nach mindestens einem der vorangehenden Ansprüche, dadurch gekennzeichnet, daß die Steuerglieder (51, 52) in Umfangsrichtung radial gewellte bzw. gefaltete Form aufweisen.

10. Rotorsystem nach mindestens einem der vorangehenden Ansprüche, dadurch gekennzeichnet, daß die sich aus den Elementen (92; 102; 110; 111; 130) zusammensetzenden Steuerglieder (51, 52) eine zueinander konzentrische Lage einnehmen und durch die unabhängig voneinander betätigbaren Verstelleinrichtungen (54, 55) unabhängig voneinander, bezogen auf die Umfangsrichtung, in eine ebene oder gewllte Form verstellbar sind.

11. Rotorsystem nach mindestens einem der vorangehenden Ansprüche, dadurch gekennzeichnet, daß die Steuerflächen (58) der Einzelelemente (130) der Steuerglieder (51, 52) zumindest in Schließstellung gegenüber der Horizontalebene zur Rotordrehachse auf einer geneigten Mantelfläche (Kegelmantelfläche) liegen und mittels der verstellbaren Elemente (54', 55') der Verstelleinrichtungen (54, 55) gegenüber den auf einer entsprechend geneigten Mantelfläche liegenden Einlaßöffnungen (59, 59') verstellbar sind.

12. Rotorsystem nach mindestens einem der vorangehenden Ansprüche, dadurch gekennzeichnet, daß die verstellbaren Elemente (54', 55') der Stellvorrichtungen der Steuerelemente (130) gegenüber der Horizontalebene zur Rotordrehachse in geneigter Richtung radial verstellbar angeordnet sind.

13. Rotorsystem nach mindestens einem der vorangehenden Ansprüche, dadurch gekennzeichnet, daß der Angriff der Verstelleinrichtungen (54, 55) an den Elementen (92; 102) der Steuerglieder (51, 52) mittels Kugelgelenken (98) erfolgt.

14. Rotorsystem nach mindestens einem der vorangehenden Ansprüche, dadurch gekennzeichnet, daß die die Ausblaseschlitze (66) an den Vorderkanten der Rotorblätter (4) steuernde Steuerglied (51) bzw. dessen Steuerfläche (58) auf einem Bereich, entsprechend dem Blattvorlaufbereich starr gehalten ist und die Steuerfläche (58) eine ebene die Ventilöffnungen (59) im Blattvorlaufbereich abschließende Form aufweist.

**Revendications**

1. Ensemble de rotor à circulation contrôlée pour hélicoptères, comprenant des pales de rotor (4) avec des fentes de soufflage (66, 67) sur le bord d'attaque des pales et respectivement le bord de fuite des pales et un dispositif de commande (16) pour la commande de la circulation de l'écoulement autour des pales de rotor dans le sens d'une commande cyclique et respectivement multicyclique ou collective de l'angle de pale au moyen d'une conduite de gaz sous pression (59, 60, 61, 64) contrôlable, séparée et différenciée menant d'une chambre de fluide sous pression (71) aux fentes de soufflage des pales, et d'organes de commande réglables (51, 52) correspondants, caractérisé en ce qu'il comprend au moins deux organes de commande (51; 52) séparés en forme de disques annulaires, munis d'une pluralité d'éléments individuels (92; 102; 110; 111; 130), les éléments individuels (92; 102; 110; 111; 130) étant juxtaposés dans le sens circonférentiel et formant des surfaces de commande (58), et les éléments individuels (92; 102; 110; 111; 130) pouvant être déplacés indépendamment les uns des autres, par l'intermédiaire de dispositifs de réglage (54, 55; 54', 55'), par rapport aux orifices (59, 59') des arrivées de gaz sous pression (61, 61') des fentes de soufflage (66, 67) sur les pales de rotor (4).

2. Ensemble de rotor selon la revendication 1, caractérisé en ce que, pour la commande des orifices d'admission (59) de la conduite de gaz sous pression (60, 61, 64, 65) vers les fentes de soufflage des pales de rotor (66, 67), à chacun des éléments individuels (92; 102; 110; 111; 130) est associé l'un des dispositifs de réglage (54, 55; 54', 55') lequel agit avec son élément réglable (54, 54') sur la surface des éléments individuels (92; 102; 110; 111; 130) opposée à la surface de commande (58).

3. Ensemble de rotor selon au moins l'une des revendications précédentes, caractérisé en ce que les surfaces de commande (58) présentent la forme d'une aire latérale de cône, de cylindre ou d'un disque annulaire, et que les orifices d'admission (59 et respectivement 59') occupent une position inclinée en conséquence.

4. Ensemble de rotor selon au moins l'une des revendications précédentes, caractérisé en ce que les éléments de commande (92; 102) sont accouplés avec jeu dans le sens circonférentiel (U).

5. Ensemble de rotor selon au moins l'une des revendications précédentes, caractérisé en ce que des articulations sont formées entre les sections (92) en forme de secteurs au moyen d'un engagement à la manière d'une charnière (93, 94) et d'axes de pivotement (96), en laissant subsister un jeu dans le sens circonférentiel (U).

6. Ensemble de rotor selon au moins l'une des revendications précédentes, caractérisé en ce que les organes de commande (51, 52) sont constitués, du moins dans des sections (102, 106) de la périphérie, par un matériau déformable élastiquement.

7. Ensemble de rotor selon au moins l'une des revendications précédentes, caractérisé en ce que les organes de commande (51, 52) sont constitués par des éléments de plaques (102) rigides en forme de secteurs et par des inserts flexibles (106) disposés entre ces derniers et s'engageant à chaque fois dans des fentes (104) de deux éléments de plaques voisins (102), la surface (58) des éléments de plaques (102) et des inserts (106) formant la surface de commande (58) des organes de commande (51, 52).

8. Ensemble de rotor selon au moins l'une des revendications précédentes, caractérisé en ce que la mise en prise entre les inserts (106) et les éléments de plaques (102) dans les fentes (104) est réalisée avec un jeu permettant un glissement relatif omnidirectionnel des éléments (102 et respectivement 106) les uns par rapport aux autres.

9. Ensemble de rotor selon au moins l'une des revendications précédentes, caractérisé en ce que les organes de commande (51, 52) présentent dans le sens circonférentiel une forme ondulée ou pliée dans le sens radial.

10. Ensemble de rotor selon au moins l'une des revendications précédentes, caractérisé en ce que les organes de commande (51, 52) assemblés à partir des éléments (92; 102; 110; 111; 130) occupent une position concentrique l'un par rapport à l'autre et qu'ils peuvent être déplacés indépendamment l'un de l'autre au moyen de dispositifs de réglage (54, 55) pouvant être actionnés indépendamment l'un de l'autre de façon à leur conférer une forme plane ou ondulée par rapport au sens circonférentiel.

11. Ensemble de rotor selon au moins l'une des revendications précédentes, caractérisé en ce que les surfaces de commande (58) des éléments individuels (130) des organes de commande (51, 52) se situent, du moins dans la position de fermeture, sur une surface latérale (aire latérale de cône) inclinée par rapport au plan horizontal vers l'axe de rotation du rotor, et qu'elles peuvent être déplacées au moyen des éléments réglables (54', 55') des dispositifs de réglage (54, 55) par rapport aux orifices d'admission (59, 59') situés sur une surface latérale inclinée en conséquence.

12. Ensemble de rotor selon au moins l'une des revendications précédentes, caractérisé en ce que les éléments réglables (54', 55') des dispositifs de réglage des éléments de commande (130) sont disposés de façon à pouvoir être déplacés radialement à l'axe de rotation du rotor, dans une direction inclinée par rapport au plan horizontal.

13. Ensemble de rotor selon au moins l'une des revendications précédentes, caractérisé en ce que le raccordement des dispositifs de réglage (54, 55) aux éléments (92; 102) des organes de commande (51, 52) est réalisé au moyen de joints sphériques (98).

14. Ensemble de rotor selon au moins l'une des revendications précédentes, caractérisé en ce que l'organe de commande (51) et respectivement sa surface de comande (58) contrôlant les fentes de soufflage (66) sur les bords d'attaque des pales de rotor (4) est maintenu de manière rigide dans une région correspondant à la région de l'avancement des pales et que la surface de commande (58) présente une forme plane obturant les ouvertures de soupapes (59) dans la région d'avancement des pales.

## Claims

1. Circulation-controlled rotor system for rotating wing aircraft, containing rotor blades (4) with exhaust slots (66, 67) on the blade leading and/or blade trailing edges thereof and a control device (16) for controlling the circulation of the flow about the rotor blades as a cyclic or multi-cyclic and collective rotor blade angle control by means of controllable, separate and differentiated pressure gas control (59, 60, 61, 64) from a pressure medium chamber (71) to the rotor blade exhaust slots and correspondingly adjustable control members (51, 52), characterised by at least two separate annular disc shaped control members (51, 52) comprising a plurality of individual elements (91, 102, 110, 111, 130), the latter being disposed in a line next to one another in relation to the peripheral direction and forming control surfaces (58), and the individual elements (92, 102, 110, 111, 130) being adjustable independently of one another by means of adjusting devices (54, 55, 54', 55') with respect to the apertures (59, 59') in the pressure gas delivery lines (61, 61') of the exhaust slots (66, 67) on the rotor blades (4).

2. Rotor system according to Claim 1, characterised in that in order to control the inlet apertures (59) of the pressure gas control (60, 61, 64, 65) to the rotor blade exhaust slots (66, 67), one of the adjusting devices (54, 55; 54', 55') is associated with each of the individual elements (92, 102, 110, 111, 130) and the adjustable element (54, 54') of the adjustable device engages on the surface, of the individual components (92, 102, 110, 111, 130), facing away from the control surface (58).

3. Rotor.system according to at least one of the preceding Claims, characterised in that the control surfaces (58) have a cone, cylinder or annular disc-shaped form, and in that the inlet apertures (59 or 59') adopt a correspondingly inclined position.

4. Rotor system according to at least one of the preceding Claims, characterised in that the control elements (92, 102) are coupled to one another leaving clearance of motion in the peripheral direction (U).

5. Rotor system according to at least one of the preceding Claims, characterised in that articulations are formed between the segment-like sections (92) by means of a hinge-like engagement (93, 94) and by means of pivoting shafts (96), leaving a clearance in the peripheral direction (U).

6. Rotor system according to at least one of the preceding Claims, characterised in that the control members (51, 52) consist of elastically deformable material at least in sections (102, 106) of the periphery.

7. Rotor system according to at least one of the preceding Claims, characterised in that the control members (51, 52) are formed by rigid, sement-shaped plate sections (102) and flexible inserts (106) which are disposed between these plate sections (102) and engage in each case in slots (104) of two adjacent plate sections (102), the surface (58) of the plate sections (102) and the inserts (106) forming the control surface (58) of the control members (51, 52).

8. Rotor system according to at least one of the preceding Claims, characterised in that the inserts (106) and the plate sections (102) engage in the slots (104) leaving a clearance of motion enabling the parts (102 or 106) to slide with respect to one another on all sides.

9. Rotor system according to at least one of the preceding Claims, characterised in that the control members (51, 52) have a radially undulating or folded form in the peripheral direction.

10. Rotor system according to at least one of the preceding Claims, characterised in that the control members (51, 52) consisting of elements (92, 102, 110, 111, 130), adopt a concentric position with respect to one another and can be adjusted independently of one another in relation to the peripheral direction in a plane or undulating manner by means of the adjusting devices (54, 55), which can be actuated independently of one another.

11. Rotor system according to at least one of the preceding Claims, characterised in that the control surfaces (58) of the individual elements (130) of the control members (51, 52) lie on an inclined generated surface (cone generated surface) at least in the closed position with respect to the horizontal plane towards the axis of rotation of the rotor and can be adjusted by means of the adjustable elements (54', 55') of the adjusting devices (54, 55) with respect to the inlet apertures (59, 59') lying on a correspondingly inclined generated surface.

12. Rotor system according to at least one of the preceding Claims, characterised in that the adjustable elements (54', 55') of the adjusting devices of the control elements (130) are disposed so as to be radially adjustable with respect to the horizontal plane towards the axis of rotation of the rotor in an inclined direction.

13. Rotor system according to at least one of the preceding Claims, characterised in that the adjusting devices (54, 55) engage on the elements (92, 102) of the control members (51, 52) by means of ball and socket joints (98).

14. Rotor system according to at least one of the preceding Claims, characterised in that the control member (51) or the control surface (58) thereof controlling the exhaust slots (66) on the leading edges of the rotor blades (4) is held rigid in an area corresponding to the blade leading area and the control surface (58) has a flat form terminating the valve openings (59) in the blade leading area.

Fig.1

EP 0 223 117 B1

Fig 2

Fig. 3

Fig. 4

Blattrücklauf 180°

2

Fig.5

Fig. 6

Fig. 7

Fig. 8a

Fig. 8

Fig. 9

Fig. 10

Fig. 11

4

Fig. 12

EP 0 223 117 B1